Europäisches Patentamt

European Patent Office

Office européen des brevets

(11) Veröffentlichungsnummer : **0 214 200 B1**

# (12) EUROPÄISCHE PATENTSCHRIFT

(45) Veröffentlichungstag der Patentschrift : 13.12.89

(21) Anmeldenummer : 86901383.9

(22) Anmeldetag : 15.02.86

(86) Internationale Anmeldenummer : PCT/EP 86/00076

(87) Internationale Veröffentlichungsnummer : WO/8605307 (12.09.86 Gazette 86/20)

(51) Int. Cl.⁴ : **G 11 B 7/095**, G 11 B 7/08, G 11 B 21/10

(54) SCHALTUNGSANORDNUNG FÜR EIN ABSPIELGERÄT VON AUDIO- UND/ODER VIDEOPLATTEN.

(30) Priorität : 09.03.85 DE 3508421

(43) Veröffentlichungstag der Anmeldung : 18.03.87 Patentblatt 87/12

(45) Bekanntmachung des Hinweises auf die Patenterteilung : 13.12.89 Patentblatt 89/50

(84) Benannte Vertragsstaaten :
AT BE CH DE FR GB IT LI LU NL SE

(56) Entgegenhaltungen :
US--A-- 4 234 837
Patents Abstracts of Japan,Band 8,Nr.282,(P323)(1719),22.Dezember 1984 & JP,A,59148185
Patents Abstracts of Japan,Band 8,Nr.10,(P248)(1447),18.Januar 1984 & JP,A,58169343
Patent Abstracts of Japan,Band 6,Nr.133,(P129)(1011),20.Juli 1982 & JP,A,5755564

(73) Patentinhaber : Deutsche Thomson-Brandt GmbH
Hermann-Schwer-Strasse 3 Postfach 1307
D-7730 Villingen-Schwenningen (DE)

(72) Erfinder : BAAS, Dieter
Sofienstrasse 10
D-7640 Kehl (DE)

**Beschreibung**

Die Erfindung betrifft einen Spurregelkreis für ein berührungslos abtastendes Abspielgerät von Audio- und/oder Videoplatten mit einem Fein- und einem Grobantrieb zur radialen Nachsteuerung einer Abtastvorrichtung, bei dem ein infolge der radialen Exzentrizität eine Welligkeit aufweisendes Spurfehlersignal, das den Feinantrieb ansteuert, erzeugt wird, und bei dem jedesmal ein Impuls mit vorgegebener Amplitude erzeugt wird, wenn die Amplitude des Spurfehlersignals einen vorgebbaren Schwellwert überschreitet CD-Spieler sind z. B. mit derartigen Spurregelkreisen ausgestattet.

Meist ist der Spurregelkreis bei einem CD-Spieler aus einem Grob- und einem Feinantrieb aufgebaut, der auf dem Grobantrieb befestigt ist. Der Grobantrieb kann z. B. als Spindel ausgeführt sein, die von einem Motor angetrieben wird. Deshalb ist die optische Abtastvorrichtung, die meist aus einem Laser, mehreren Linsen, einem Prismenstrahlteiler und einem Photodetektor besteht, mittels des Grobantriebs in radialer Richtung bezüglich der CD-Platte bewegbar.

Mittels des Feinantriebs ist der Lichtstrahl in radialer Richtung zum Beispiel um einen kleinen Winkel kippbar, so daß der Lichstrahl durch diese Kippbewegung ein kleines Stück entlang einem Radius der CD-Platte fahren kann.

Weil der Regelbereich des Feinantriebs je nach Typ nur etwa $\pm$ 100 Spuren umfasst, muß der Grobantrieb beim Spielen einer CD-Platte von Zeit zu Zeit eingeschaltet werden, damit der Lichtstrahl nicht von der abzutastenden Spur reißt. Der Regelbereich des Feinantriebs ist zumindest so groß zu wählen, daß er die Exzentrizitäten einer CD-Platte ausregeln kann. Zwar wäre es regelungstechnisch gesehen günstiger, den Grobantrieb nicht intermittierend, sondern kontinuierlich laufen zu lassen. Bei CD-Spielern ist aber diese Lösung nicht verwirklicht, weil es keine derart langsam laufenden Motoren für den Grobantrieb gibt. Es wäre deshalb ein Getriebe erforderlich, das aber wegen seines Gewichts und seines Platzbedarfs bei CD-Spielern nicht in Frage kommt.

Beim Spielen einer CD-Platte ist es besonders wichtig, daß der Feinantrieb symmetrisch arbeitet oder mit anderen Worten ausgedrückt, daß der optimale Arbeitspunkt erhalten bleibt. Es darf z. B. nicht vorkommen, daß der Grobantrieb erst dann anläuft, wenn der Feinantrieb bereits am einen Anschlag seines Regelbereichs anschlägt. Das wäre bei dem genannten Zahlenbeispiel der Fall, wenn der Feinantrieb nur noch nach der einen Richtung z. B. — 200 Spuren überstreichen kann. In diesem Fall kann der Spurregelkreis eine Exzentrizität von z. B. + 50 Spuren nicht mehr ausregeln. Der Grobantrieb sollte daher stets so rechtzeitig anlaufen, daß der Feinantrieb symmetrisch arbeiten kann, d. h., daß er nach beiden Seiten gleich viele Spuren, z. B. ± 100 Spuren überstreichen kann. Dann ist der Arbeitspunkt optimal, denn er liegt genau in der Mitte des Regelbereiches.

Aus der JP-A 58-169343 ist eine Schaltungsanordnung zum Ein- und Ausschalten eines Grobantriebs bekannt, bei der ein Flip-Flop von einem ersten Vergleicher gesetzt wird, wenn das Spurfehlersignal — die Abweichung des Istwerts vom Sollwert — unter eine vorgegebene Referenzspannung sinkt. Ein Oszillator, dessen Eingang mit dem Q-Ausgang des Flip-Flops verbunden ist, gibt deshalb Impulse zur Steuerung an den Motor des Grobantriebs ab. Sobald infolge des eingeschalteten Grobantriebs wieder der Regelbereich des Feinantriebs erreicht wird, setzt ein zweiter Vergleicher das Flip-Flop zurück, weil das Spurfehlersignal eine zweite Referenzspannung überschreitet. Durch Zurücksetzen des Flip-Flops wird der Grobantrieb wieder ausgeschaltet.

In der WO86/05308 (=DE A 3 508 422) ist ein Spurregelkreis vorgeschlagen worden, bei dem der Grobantrieb eingeschaltet wird, wenn das integrierte Spurfehlersignal einen vorgegebenen Schwellwert überschreitet. Dieser Spurregelkreis, bei dem das Integral des Spurfehlersignals mit einem Schwellwert verglichen wird, hat den Nachteil, daß der Arbeitspunkt des Feinantriebes bei CD-Platten unterschiedlicher Exzentrizität aus seiner optimalen Mittellage wandern kann.

Es ist daher Aufgabe der Erfindung, den Grobantrieb eines Spurregelkreises so anzusteuern, daß der Arbeitspunkt des Feinantriebs möglichst in der Mitte des Regelbereichs bleibt.

Die Erfindung löst diese Aufgabe bei einem Spurregelkreis der eingangs genannten Art dadurch, daß der Grobantrieb eingeschaltet wird, wenn das Impuls-Pausen-Verhältnis des Impulssignals einen vorgebbaren zweiten Schwellwert überschreitet.

Es zeigen:

Figur 1 Übertragungskurven eines bekannten Feinantriebs

Figur 2 Auswirkungen der radialen Exzentrizität auf den Arbeitspunkt

Figur 3a eine Schaltungsanordnung aus WO86/05308

Figur 3b das Spurfehlersignal ohne Nachführung des Grobantriebs

Figur 3c die Impulsfolge $U_K$ am Komparatorausgang

Figur 4 einen Teil des erfindungsgemäßen Spurregelkreises.

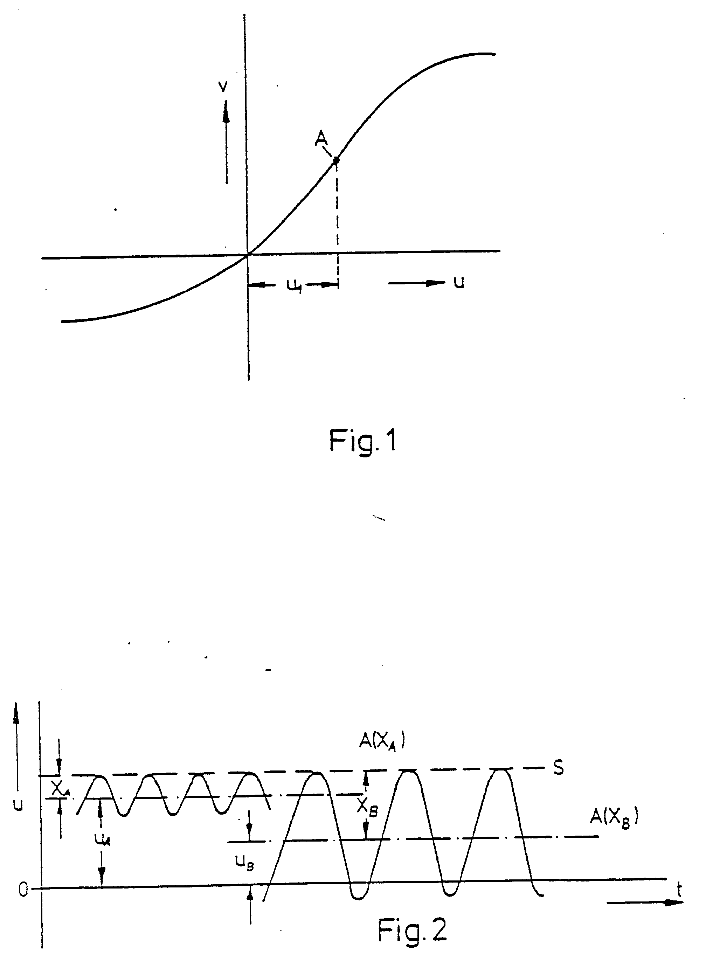

Figur 1 zeigt als Beispiel für einen typischen Feinantrieb den Verlauf der Kurve v = f(u), wobei mit v die Bewegungsamplitude und mit u die elektrische Spannung am Feinantrieb bezeichnet sind. Bedingt durch die Nichtlinearität darf bei der Kurve v = f(u) der Arbeitspunkt A bei diesem Feinantrieb nicht bei u = 0 gewählt werden. Eine einwandfreie Abtastung kann erst bei $u = u_1$ vorgenommen werden.

Figur 2 zeigt die Auswirkung einer Verschiebung des Arbeitspunktes. Bei einem Feinantrieb mit einem Schwellwertdetektor und einem vorgegebenen Schwellwert S, wie er in WO86/05308 beschrieben ist, bewirken unterschiedliche Exzentrizitäten eine Verschiebung des Arbeitspunktes A aus der optimalen Mittellage. Bei kleinen radialen Exzentrizitäten $X_A$ ist die Verschiebung des Arbeitspunktes A $(X_A)$ gering, bei großen radialen Exzentrizitäten $X_B$ wird sie jedoch sehr groß.

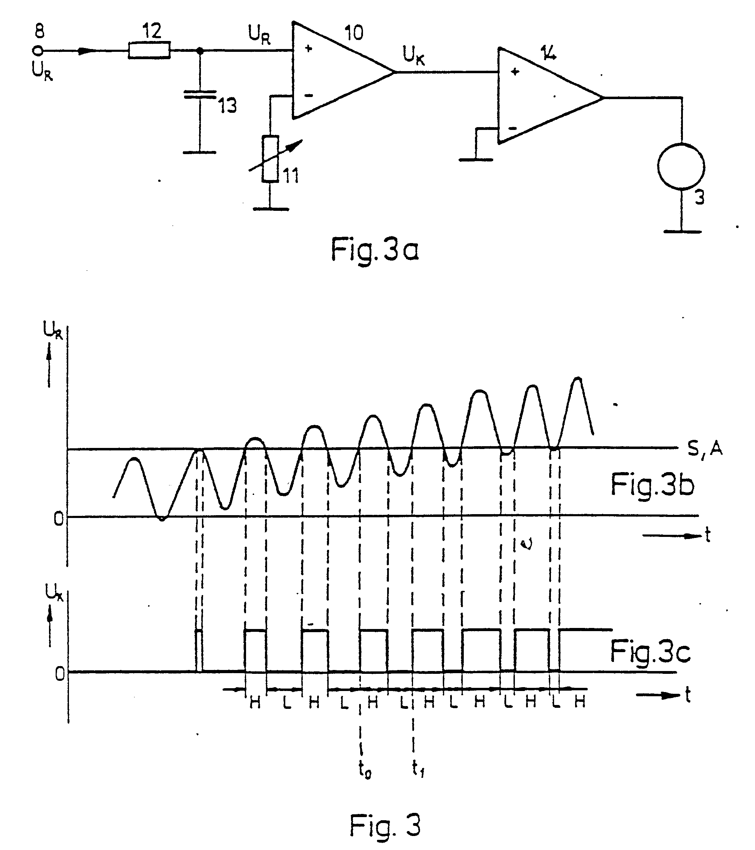

In der Figur 3a ist die Schaltungsanordnung aus WO86/05308 gezeigt. Vom Eingang 8 wird das Spurfehlersignal $U_R$ über ein RC-Glied 12, 13 dem nichtinvertierenden Eingang eines Komparators 10 zugeführt. Der invertierende Eingang des Komparators 10 ist über einen den Schwellwert einstellenden regelbaren Widerstand 11 mit Bezugspotential verbunden.

Wenn das Spurfehlersignal $U_R$ den mittels des Widerstandes 11 vorgegebenen Schwellwert überschreitet, gibt der Komparator 10 einen Impuls ab, der den Verstärker 14 ansteuert. Der Verstärker 14 treibt daher den Grobantrieb 3 an. Sinkt das Spurfehlersignal $U_R$ wieder unter den vorgegebenen Schwellwert, bleibt der Grobantrieb 3 stehen.

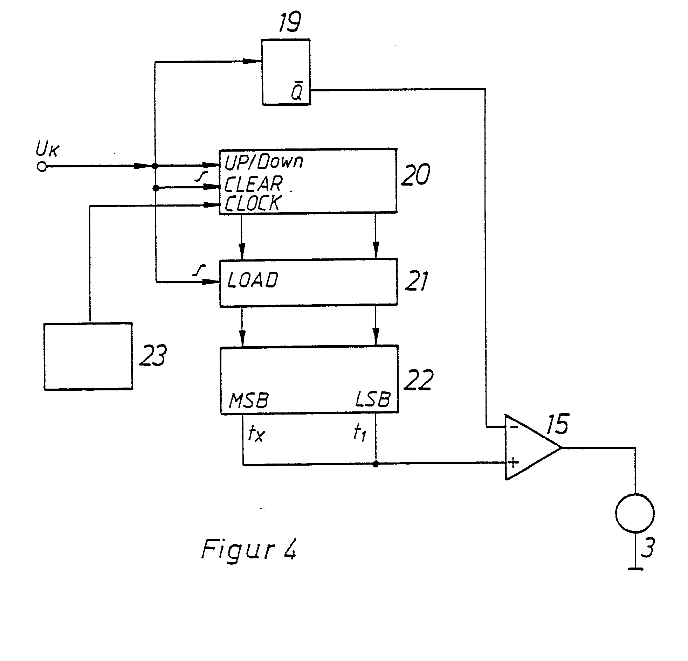

Bei dieser Schaltungsannordnung wird aber der Arbeitspunkt infolge der Exzentrizität einer CD-Platte mehr oder weniger stark aus seiner optimalen Mittellage verschoben. Um den Arbeitspunkt stets möglichst genau in der optimalen Mittellage zu halten, ist bei der Erfindung zwischen dem Ausgang des Komparators 10 und dem Grobantrieb 3 die Schaltungsanordnung aus Figur 4 mit den Bauteilen 19, 20, 21, 22 und 23 vorgesehen, wie im folgenden beschrieben wird.

Der Ausgang des Komparators 10 aus Figur 3a ist mit dem Zählrichtungseingang Up/down sowie mit dem Löscheingang CLEAR eines Vorwärts-Rückwärts-Zählers 20, mit dem Eingang eines Monoflops 19 und mit dem Ladeeingang LOAD eines Speichers 21 verbunden. Der invertierende Eingang des Verstärkers 15 aus Figur 4, der dem Verstärker 14 aus Figur 3 entspricht, ist mit dem Q-Ausgang des Monoflops 19 verbunden.

Die Ausgänge des Zahlers 20, an denen der Zählerstand abnehmbar ist, sind mit den Eingängen des Speichers 21 verbunden, dessen Ausgänge mit den Monoflops 22 verbunden sind. Die miteinander verbundenen Ausgänge der Monoflops 22 sind mit dem nichtinvertierenden Eingang des Verstärkers 15 verbunden.

In Figur 3b ist der Verlauf des Spurfehlersignals $U_R$ am Eingang des Komparators 10 für den Fall dargestellt, daß der Grobantrieb ausgeschaltet bleibt. Aufgrund des Spurvorschubs durch den Feinantrieb ergibt sich ein langsames Ansteigen des Spurfehlersignals $U_R$.

In Figur 3c ist die am Ausgang des Komparators 10 auftretende Impulsfolge $U_K$ aufgezeichnet. Aus der Impulsfolge $U_K$ wird durch Vergleich der Impulsbreite mit der folgenden Impulspause ein Kriterium für den richtigen Arbeitspunkt A gewonnen. Eine Nachregelung des Grobantriebs 3 kann dann vorgenommen werden, wenn das Impuls-Pausen-Verhältnis z. B. 1 ist. Bei einem Impuls-Pausen-Verhältnis von 1 ist eine exakte Einstellung des Arbeitspunktes A für den Feinantrieb erreicht.

Mit Hilfe des Vorwärts-Rückwärts-Zählers 20, der von einem Taktgenerator 23 Taktimpulse erhält, werden die unterschiedlichen Breiten der Impulse $U_K$ detektiert; über die unterschiedlich eingestellten Monoflops 22 werden die Impulse zur Ansteuerung des Grobantriebs 3 gewonnen.

Die vom Taktgenerator 23 erzeugten Taktimpulse werden während eines Impulses der Impulsfolge $U_K$ im Vorwärts-Rückwärts-Zähler 20 gezählt. Während einer Impulspause in der Impulsfolge $U_K$ zählt der Vorwärts-Rückwärts-Zähler 20 dagegen rückwärts, so daß der Zählerstand mit jedem Taktimpuls während einer Impulspause in der Impulsfolge $U_K$ um 1 erniedrigt wird. Solange ein Impuls in der Impulsfolge $U_K$ kürzer ist als die folgende Impulspause, bleibt der Zählerstand des Vorwärts-Rückwärts-Zählers 20 daher auf null stehen. Erst wenn die Impulsdauer größer wird als die folgende Impulspause oder mit anderen Worten ausgedrückt, wenn das Impuls-Pausen-Verhältnis größer 1 ist, wird der Zählerstand größer als null. Bei jeder ansteigenden Flanke in der Impulsfolge $U_K$ wird der Zählerstand des Vorwärts-Rückwärts-Zählers 20 vom Speicher 21 übernommen und der Monoflop-Kette 22 zugeführt; anschließend wird der Vorwärts-Rückwärtszähler 20 auf null zurückgesetzt.

Je breiter die Impulse in der Impulsfolge $U_K$ am Ausgang des Komparators 10 sind, desto größer ist der Zählerstand des Vorwärts-Rückwärts-Zählers 20. Je größer der Zählerstand des Vorwärts-Rückwärts-Zählers 20 aber ist, desto mehr Monoflops 22 werden getriggert und desto länger dreht sich der Grobantrieb in die eine Richtung. Während einer Impulspause in der Impulsfolge $U_K$ am Ausgang des Komparators 10 wird das Monoflop 19 nicht mehr getriggert, dessen Zeitkonstante mindestens so groß gewahlt ist, wie die größte vorkommende Impulsperiodendauer in der Impulsfolge $U_K$. Weil sein invertierender Ausgang Q daher auf « High » geht, wird der Grobantrieb 3 so lange in die entgegengesetzte Richtung gedreht, bis wieder ein Impuls in der Impulsfolge $U_K$ am Ausgang des Komparators kommt. Weil der Grobantrieb 3 bei einem Impuls in die eine Richtung — je länger der Impuls desto länger —, bei einer Impulspause dagegen in die entgegengesetzte Richtung — je länger die Impulspause desto länger — gedreht wird, wird der Arbeitspunkt mit großer Genauigkeit in seiner optimalen Mittellage gehalten.

## Patentansprüche

1. Spurregelkreis für ein berührungslos abtastendes Abspielgerät von Audio- und/oder Videoplatten mit einem Fein- und einem Grobantrieb (3) zur radialen Nachsteuerung einer Abtastvorrichtung, bei dem ein infolge der radialen Exzentrizität eine Welligkeit aufweisendes Spurfehlersignal ($U_R$), das den Feinantrieb ansteuert, erzeugt wird, und bei dem jedesmal ein Impuls (U$_K$) mit vorgegebener Amplitude erzeugt wird, wenn die Amplitude des Spurfehlersignals (U$_R$) einen vorgebbaren Schwellwert (S) überschreitet, dadurch gekennzeichnet, daß der Grobantrieb (3) eingeschaltet wird, wenn das Impuls-Pausen-Verhältnis des Impulssignals einen vorgebbaren zweiten Schwellwert überschreitet.

2. Spurregelkreis nach Anspruch 1, dadurch gekennzeichnet, daß der Grobantrieb (3) erst in die eine Richtung eingeschaltet wird, wenn die Impulsdauer (H) größer wird als die Impulspause (L).

3. Spurregelkreis nach Anspruch 2, dadurch gekennzeichnet, daß der Grobantrieb (3) in die entgegengesetzte Richtung angetrieben wird, wenn die Impulspause (L) größer ist als die Impulsdauer (H).

4. Spurregelkreis nach Anspruch 1, 2, oder 3, dadurch gekennzeichnet, daß ein Vorwärts-Rückwärts-Zähler (20) während eines Impulses (U$_K$) vorwärts, während einer Impulspause dagegen rückwärts zählt und daß aus dem Zählerstand des Vorwärts-Rückwärts-Zählers (20) die Steuerimpulse zur Ansteuerung des Grobantriebs (3) gewonnen werden.

5. Spurregelkreis nach Anspruch 4, dadurch gekennzeichnet, daß ein Speicher (21) bei jeder positiven Flanke eines Impulses (U$_K$) den Zählerstand übernimmt.

6. Spurregelkreis nach Anspruch 5, dadurch gekennzeichnet, daß die Ausgänge des Speichers (21) mit den Eingängen einer Monoflop-Kette (22) verbunden sind, deren Ausgänge über einen Differenzverstärker (15) mit dem Grobantrieb (3) verbunden sind, und daß die Zeitkonstanten der einzelnen Monoflops (22) unterschiedlich gewählt sind.

7. Spurregelkreis nach Anspruch 6, dadurch gekennzeichnet, daß das Spurfehlersignal (U$_R$) in einem Komparator (10) mit einem vorgebbaren Schwellwert (S) verglichen wird, daß der Komparator (10) bei überschreiten des vorgegebenen Schwellwerts (S) einen Impuls (U$_K$) an den Vorwärts-Rückwärts-Zähleingang (Up/down) und den Löscheingang (CLEAR) des Vorwärts-Rückwärts-Zählers (20), an den Ladeeingang (LOAD) des Speichers (21) sowie an den Eingang eines Monoflops (19) gibt, daß die Ausgänge des Vorwärts-Rückwärts-Zählers (20), dessen Takteingang (CLOCK) mit dem Ausgang eines Taktgenerators (23) verbunden ist, mit den Eingängen des Speichers (21) verbunden sind, daß die Ausgänge des Speichers (21) mit den Eingängen der Monoflop-Kette (22) verbunden sind, deren Ausgang mit dem einen Eingang des Differenzverstärkers (15) verbunden ist, dessen anderer Eingang mit dem Q-Ausgang des Monoflops (19) verbunden ist, und daß der Ausgang des Differenzverstärkers (15) mit dem Grobantrieb (3) verbunden ist.

8. Spurregelkreis nach Anspruch 7, dadurch gekennzeichnet, daß die Zeitkonstante des Monoflops (19) mindestens so groß gewählt ist wie die größte vorkommende Impulsperiodendauer.

## Claims

1. Track control circuit for a contactless scanning playback device for audio and/or video discs with a fine and a coarse drive (3) for the radial readjustment of a scanning device, in which a radial error signal (U$_R$) exhibiting a ripple due to the radial eccentricity and controlling the fine drive is generated, and in which a pulse (U$_R$) of pre-set amplitude is generated whenever the amplitude of the radial error signal (U$_R$) exceeds a presettable threshold value (S), characterised in that the coarse drive is switched on if the mark-space ratio of the pulse signal exceeds a presettable second threshold value.

2. Track control circuit according to claim 1, characterised in that the coarse drive (3) is switched on in the one direction only if the pulse duration (H) becomes greater than the pulse interval (L).

3. Track control circuit according to claim 2, characterised in that the coarse drive (3) is driven in the opposite direction if the pulse interval (L) in greater than the pulse duration (H).

4. Track control circuit according to claim 1, 2 or 3, characterised in that an up-down counter (20) counts up during a pulse (U$_K$) and conversely down during a pulse interval and that the control pulses for directing the coarse drive (3) are obtained from the counter reading of the up-down counter (20).

5. Track control circuit according to claim 4, characterised in that a memory (21) adopts the counter reading whenever a pulse (U$_K$) has a positive edge.

6. Track control circuit according to claim 5, characterised in that the outputs of the memory (21) are connected to the inputs of a monoflop chain (22) the outputs of which are connected to the coarse drive (3) via a difference amplifier (15), and that different time constants are chosen for the individual monoflops (22).

7. Track control circuit according to claim 6, characterised in that the radial error signal (U$_R$) is compared with a presettable threshold value (S) in a comparator (10) on the exceeding of the preset threshold value (S) transmits a pulse (U$_K$) to the up-down counting input (up/down) and the clear input (CLEAR) of the up-down counter (20), to the input (LOAD) of the memory (21) and to the input of a monoflop (19), that the outputs of the up-down counter (20) the clock input (CLOCK) of which is connected to the output of a clock generator (23) are connected to the inputs of the memory (21), that the outputs of the memory (21) are connected to the inputs of the monoflop chain (22) the output of which is connected to one input of the difference amplifier (15), the other input of which is connected to the Q output of the monoflop (19), and that the output of the difference amplifier (15) is connected to the coarse drive (3).

8. Track control circuit according the claim 7, characterised in that the time constant selected for the monoflop (19) is at least as great as the greatest pulse interval occurring.

**Revendications**

1. Circuit de régulation de piste pour un appareil de lecture sans contact de disques audio et/ou vidéo, comprenant un moyen d'entraînement fin et un moyen d'entraînement grossier (3) pour l'ajustement radial d'une tête de lecture, et produisant un signal d'erreur de piste ($U_R$) qui, dû à l'excentricité radiale, présente une ondulation et qui contrôle le moyen d'entraînement fin, ce circuit engendrant une impulsion ($U_K$) d'amplitude prédéterminée chaque fois que l'amplitude du signal d'erreur de piste ($U_R$) dépasse un seuil (S) donné, caractérisé en ce que le moyen d'entraînement grossier (3) est mis en marche lorsque le rapport de commutation de ladite impulsion dépasse un second seuil donné.

2. Circuit de régulation de piste selon la revendication 1, caractérisé en ce que le moyen d'entraînement grossier (3) est mis en rotation en une direction seulement si la durée (H) d'impulsion devient plus grande que le créneau (L) entre deux impulsions.

3. Circuit de régulation de piste selon la revendication 2, caractérisé en ce que le moyen d'entraînement grossier (3) est mis en rotation en sens inverse lorsque le créneau (L) est plus grand que la durée (H) de l'impulsion.

4. Circuit de régulation de piste selon la revendication 1, 2 ou 3, caractérisé en ce qu'un compteur-décompteur (20) compte pendant une impulsion ($U_K$), alors qu'il décompte pendant un créneau entre deux impulsions et qu'on déduit les impulsions de commande pour le moyen d'entraînement grossier (3) de l'état de comptage du compteur-décompteur (20).

5. Circuit de régulation de piste selon la revendication 4, caractérisé en ce qu'une mémoire (21) reçoit l'état de comptage à chaque montée positive d'une impulsion ($U_K$).

6. Circuit de régulation de piste selon la revendication 5, caractérisé en ce que les sorties de la mémoire (21) sont reliées aux entrées d'une chaîne de bascules monostables (22) dont les sorties sont reliées à travers un amplificateur différentiel (15) au moyen d'entraînement grossier (3), et que les constantes de temps des différents monostables (22) sont fixées différemment.

7. Circuit de régulation de piste selon la revendication 6, caractérisé en ce que le signal d'erreur de piste ($U_K$) est comparé dans un comparateur (10) à un seuil prédéterminé (S), que le comparateur (10) émet une impulsion ($U_K$) vers l'entrée de direction de comptage (Up/down) et vers l'entrée de remise à zéro (CLEAR) du compteur-décompteur (20), vers l'entrée de charge (LOAD) de la mémoire (21) ainsi que vers l'entrée d'une bascule monostable (19) si le seuil prédéterminé (S) est dépassé, que les sorties du compteur-décompteur (20), dont l'entrée horloge (CLOCK) est reliée à la sortie d'un générateur d'horloge (23), est relié aux entrées de la mémoire (21), que les sorties de la mémoire (21) sont reliées aux entrées de la chaîne de bascules monostables (22) dont la sortie est reliée à l'une des entrées de l'amplificateur différentiel (15), l'autre entrée de cet amplificateur étant reliée à la sortie Q de la bascule monostable (19), et que la sortie de l'amplificateur différentiel (15) est reliée au moyen d'entraînement grossier (3).

8. Circuit de régulation de piste selon la revendication 7, caractérisé en ce que la constante de temps de la bascule monostable (19) est choisie au moins aussi grande que la plus longue des durées de la période de l'impulsion qui pourrait arriver.

Fig.1

Fig.2

1

Fig. 3a

Fig.3b

Fig.3c

Fig. 3

2

*Figur 4*